# EUROPEAN PATENT APPLICATION

(11) **EP 3 035 100 A1**
(43) Date of publication of application: **22.06.2016**
(21) Application number: 15199502.4
(22) Date of filing: 11.12.2015
(51) Int. Cl.: G02B 17/08

(54) **ULTRA SHORT-THROW PROJECTION LENS UNIT**

(30) Priority: 17.12.2014 CN 201410788680
(71) Applicant: Shenzhen Estar Technology Group Co., Ltd, Guangdong 518057 (CN)
(72) Inventor: LIU, Meihong, Shenzhen Guangdong Province 518057 (CN); MU, Lin, Shenzhen Guangdong Province 518057 (CN); JI, Chaochao, Shenzhen Guangdong Province 518057 (CN)
(74) Representative: Office Kirkpatrick

(57) **Abstract**

An ultra short-throw projection lens unit is disclosed, which is adapted to image a first image (1010) displayed on a display into an amplified second image. The ultra short-throw projection lens unit includes the following components that are arranged sequentially along an optical path: a first lens assembly (101), being adapted to image the first image (100) into a first intermediate image (103); an aperture stop (106) disposed at an imaging position of the first intermediate image (103); a second lens assembly (102), being adapted to image the first intermediate image (103) into a second intermediate image (104); and a reflecting mirror (105), being adapted to reflect the second intermediate image (104) to form the amplified second image. The first lens assembly (101), the aperture stop (106) and the second lens assembly (102) have a same principal optical axis. The ultra short-throw projection lens unit has a transmittance of 0.2∼0.25 and a focus of -2.9 mm∼-3.2 mm, and an offset of the first image (100) relative to the principal optical axis is greater than 120%. The present disclosure can project a large-sized image at a short distance and with a high imaging quality.

## Description

### FIELD

The present disclosure relates to the technical field of optical systems, and more particularly, to an ultra short-throw projection lens unit.

### BACKGROUND

Ultra short-throw projection lens units can effectively shorten the projection distance of projectors, and are currently known as an important means to project large-sized pictures at a short distance on the market.

There are three types of designs for shortening the focal distance of a projection lens unit: the refractive type, the reflective type, and the hybrid type. For the refractive type of design, the projection lens unit consists of purely optical lenses including spherical lenses or aspheric lenses. Because both the number and the kinds of the lens pieces are relatively large, the structure of the refractive type is usually complex and is unfavorable for production. For the reflective type of design, the projection lens unit consists of purely reflective mirrors including spherical or aspheric reflecting mirrors and the reflecting mirrors may be convex, concave or planar reflecting mirrors. However, the aspheric reflecting mirrors are relatively difficult to fabricate and to inspect, so the plurality of reflecting mirrors undoubtedly increases the cost and the difficulty in production of the projection lens unit. In contrast, the hybrid type of design incorporates the technical features of both the refractive type and the reflective type and combines the optical lenses and the reflecting mirrors in the design, so it has become the mainstream scheme of ultra short-throw projection lens units currently available on the market.

Currently, many kinds of structures based on the hybrid design principle of refraction-and-then-reflection have been proposed. For lenses or systems based on the hybrid design principle of refraction-and-then-reflection, they need to project a relatively large-sized picture at a relatively short distance and low transmittance is required, so the image projected is liable to distortion, spherical aberration, chromatic aberration or the like, and the depth of field and the image plane brightness are difficult to be controlled. As a consequence, the image quality is poor.

### SUMMARY

The primary technical problem to be solved by the present disclosure is to provide an ultra short-throw projection lens unit capable of projecting a large-sized image at a short distance and with an improved imaging quality.

To solve the aforesaid technical problem, a technical solution adopted by the present disclosure is to provide an ultra short-throw projection lens unit, which is adapted to image a first image displayed on a display into an amplified second image. The ultra short-throw projection lens unit comprises the following components that are arranged sequentially along an optical path: a first lens assembly, an aperture stop, a second lens assembly and a reflecting mirror. The first lens assembly is adapted to image the first image into a first intermediate image. The aperture stop is disposed at an imaging position of the first intermediate image. The second lens assembly is adapted to image the first intermediate image into a second intermediate image. The reflecting mirror is disposed behind the second lens assembly and is adapted to reflect the second intermediate image to form the amplified second image. The first lens assembly, the aperture stop and the second lens assembly have a same principal optical axis; and the ultra short-throw projection lens unit has a transmittance of 0.2∼0.25 and a focus of -2.9 mm∼-3.2 mm, and an offset of the first image relative to the principal optical axis is greater than 120%.

In one embodiment, the reflecting mirror is a planar mirror or a concave reflecting mirror.

In one embodiment, when the reflecting mirror is a concave reflecting mirror, the concave reflecting mirror has the same principal optical axis as the first lens assembly.

In one embodiment, a concave surface of the concave reflecting mirror is a free-form surface.

In one embodiment, the reflecting mirror is disposed behind the second intermediate image.

In one embodiment, the first lens assembly comprises a first lens, a second lens, a third lens, a fourth lens and a fifth lens arranged sequentially along the optical path, the first lens is a biconvex lens, the second lens is a biconvex lens, the third lens is a convex-concave lens, the fourth lens is a biconcave lens, and the fifth lens is a convex-concave lens.

In one embodiment, the fourth lens and the fifth lens are adhered into one piece.

In one embodiment, the fourth lens has a refractive index higher than that of the fifth lens, a chromatic dispersion greater than that of the fifth lens, and an Abbe number lower than that of the fifth lens.

In one embodiment, the second lens assembly at least comprises one aspheric lens.

In one embodiment, the second lens assembly comprises a sixth lens, a seventh lens, an eighth lens, a ninth lens, a tenth lens, an eleventh lens, a twelfth lens and a thirteenth lens; and the sixth lens is a biconvex lens, the seventh lens is a biconcave lens, the eighth lens is a convex-concave lens, the ninth lens is a concave-convex lens, the tenth lens is a biconcave lens, the eleventh lens is an aspheric lens, the twelfth lens is a concave-convex lens, and the thirteenth lens is a concave-convex lens.

As compared to the prior art, the present disclosure has the following benefits: a first lens assembly and a second lens assembly having a same principal optical axis are disposed so that the first image propagating into the projection lens unit is refracted by the first lens assembly into a first intermediate image, the first intermediate image is then refracted by the second lens assembly into a second intermediate image which, in turn, is reflected by the reflecting mirror into an amplified second image. Specifically, firstly the first intermediate image with little distortion is formed by the first lens assembly, then the first intermediate image is corrected and amplified into the second intermediate image by the second lens assembly, and finally beams of the second intermediate image is projected by the reflecting mirror onto a screen to form an image with almost no distortion on the screen. Thus, an improvement can be effectively made on the aberrations by forming the two intermediate images. Furthermore, an aperture stop is disposed between the first lens assembly and the second lens assembly. The aperture stop can improve the definition of the image, control the depth of field, improve the imaging quality, and control the spatial range of the imaged object and control the brightness of the image plane. By disposing the aperture stop at the position of the first intermediate image, the imaging quality of off-axis points can be improved so that reflected light speckle components are eliminated to improve contrast of the image. Additionally, by disposing the reflecting mirror on the light propagation path, the optical path is extended to allow for short-throw projection. The structure of the present disclosure imparts relatively low transmittance to the projection optical system, so the ultra short-throw projection lens unit of the present disclosure can project a large-sized image at a short distance and with a high imaging quality.

### BRIEF DESCRIPTION OF THE DRAWINGS

Implementations of the present technology will now be described, by way of example only, with reference to the attached figures, wherein:
FIG. 1 is a schematic structural view of one embodiment of an ultra short-throw projection lens unit of the present disclosure.
FIG. 2 is a schematic structural view of one embodiment of the ultra short-throw projection lens unit of the present disclosure.
FIG. 3 is a schematic view illustrating the imaging principle of the ultra short-throw projection lens unit of FIG. 2.
FIG. 4 is an overall schematic view illustrating the imaging of the ultra short-throw projection lens unit of FIG. 2.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts have been exaggerated to better illustrate details and features of the present disclosure.

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

Several definitions that apply throughout this disclosure will now be presented.

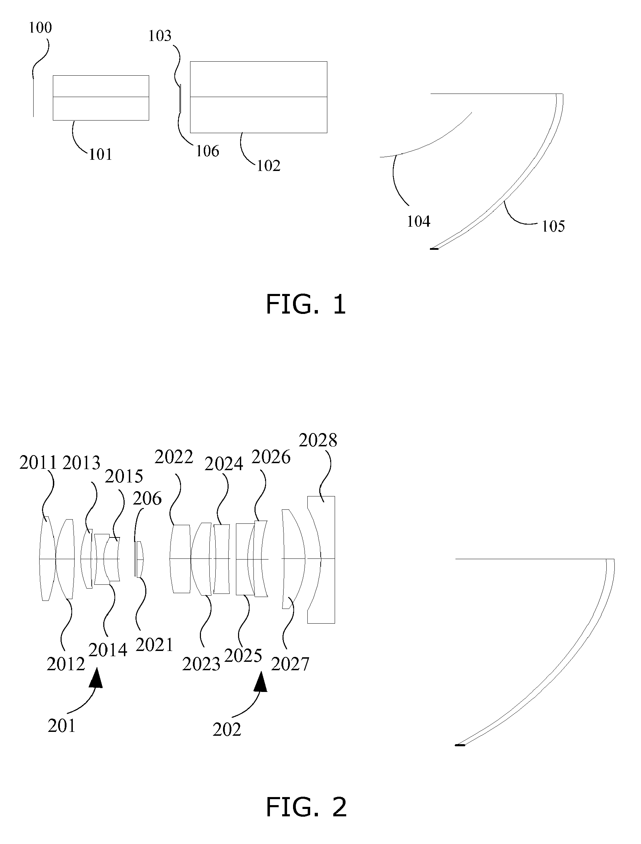

Referring to FIG. 1, there is shown a schematic structural view of one embodiment of the ultra short-throw projection lens unit of the present disclosure.

The ultra short-throw projection lens unit is adapted to image a first image 100 displayed on a display into an amplified second image. The ultra short-throw projection lens unit comprises the following components that are arranged sequentially along an optical path: a first lens assembly 101, an aperture stop 106, a second lens assembly 102 and a reflecting mirror 105.

The first lens assembly 101 is adapted to image the first image 100 into a first intermediate image 103. The second lens assembly 102 is adapted to image the first intermediate image 103 into a second intermediate image 104. The aperture stop 106 is disposed between the first lens assembly 101 and the second lens assembly 102 and at an imaging position of the first intermediate image 103. In one embodiment, the image of the aperture stop 106 that is formed through the first lens assembly 101 matches with an exit pupil of an optical system consisting of the first lens assembly 101 and the second lens assembly 102. The reflecting mirror 105 is adapted to reflect the second intermediate image 104 to form the amplified second image. The reflecting mirror 105 may be a planar mirror or a concave reflecting mirror. The reflecting mirror is disposed behind the second lens assembly 102, and may be disposed at an imaging position of the second intermediate image 104 or behind the second intermediate image 104. In this embodiment, the reflecting mirror 105 is a planar mirror, and is disposed behind the second intermediate image 104. The first lens assembly 101, the aperture stop 106 and the second lens assembly 102 have a same principal optical axis. The ultra short-throw projection lens unit has a transmittance of 0.2∼0.25 and a focus of -2.9 mm∼-3.2 mm, and an offset of the first image 100 relative to the principal optical axis is greater than 120%.

As compared to the prior art, a first lens assembly 101 and a second lens assembly 102 having a same principal optical axis are configured so that the first image 100 propagating into the projection lens unit is refracted by the first lens assembly 101 into a first intermediate image 103, the first intermediate image 103 is then refracted by the second lens assembly 102 into a second intermediate image 104 which, in turn, is reflected by the reflecting mirror 105 into an amplified second image. Specifically, firstly the first intermediate image 103 with little distortion is formed by the first lens assembly 101, then the first intermediate image 103 is corrected and amplified into the second intermediate image 104 by the second lens assembly 102, and finally beams of the second intermediate image 104 is projected by the reflecting mirror 105 onto a screen to form an image with almost no distortion on the screen. Thus, an improvement can be effectively made on the aberrations by forming the two intermediate images. Furthermore, an aperture stop 106 is disposed between the first lens assembly 101 and the second lens assembly 102. The aperture stop 106 can improve the definition of the image, control the depth of field, improve the imaging quality, and control the spatial range of the imaged object and control the brightness of the image plane. By disposing the aperture stop 106 at the position of the first intermediate image 103, the imaging quality of off-axis points can be improved so that reflected light speckle components are eliminated to improve contrast of the image. Additionally, by disposing the reflecting mirror on the light propagation path, the optical path is extended to allow for short-throw projection. The structure of the present disclosure imparts relatively low transmittance to the projection optical system, so the ultra short-throw projection lens unit of the present disclosure can project a large-sized image at a short distance and with a high imaging quality.

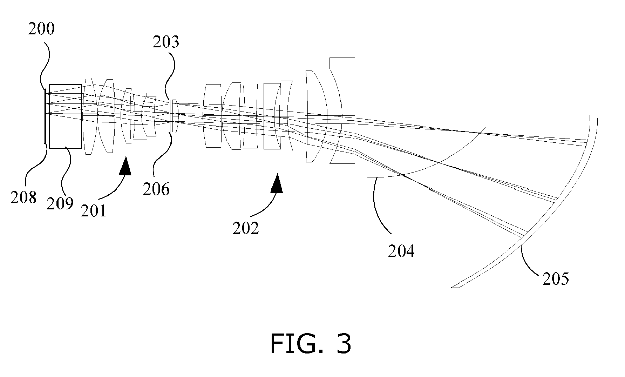

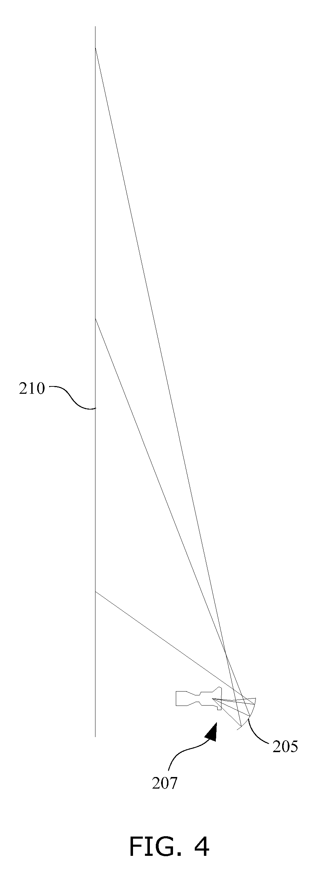

Referring to FIG. 2 to FIG. 4, FIG. 2 is a schematic structural view of one embodiment of the ultra short-throw projection lens unit of the present disclosure. FIG. 3 is a schematic view illustrating the imaging principle of the ultra short-throw projection lens unit of the present disclosure. FIG. 4 is an overall schematic view of the imaging of the ultra short-throw projection lens unit of the present disclosure.

In one embodiment, the ultra short-throw projection lens unit 207 further comprises a display device 208 and a prism 209 disposed in front of a first lens assembly 201. The display device 208 is adapted to display a first image 200. The first image 200 is refracted by the prism 209 and the first lens assembly 201 into a first intermediate image 203 at the position of an aperture stop 206. The first intermediate image 203 is refracted by a second lens assembly 202 into a second intermediate image 204. A reflecting mirror 205 is disposed behind the second intermediate image 204 and is adapted to reflect the second intermediate image 204 to finally form the amplified second image on a screen 210.

The first lens assembly 201 comprises a first lens 2011, a second lens 2012, a third lens 2013, a fourth lens 2014 and a fifth lens 2015 arranged sequentially along the optical path. The first lens 2011 is a biconvex lens, the second lens 2012 is a biconvex lens, the third lens 2013 is a convex-concave lens, the fourth lens 2014 is a biconcave lens, and the fifth lens 2015 is a convex-concave lens. The five lenses transform the first image propagating into the optical system into the first intermediate image with little distortion.

When beams emitted from an on-axis object point pass through the lens assembly, lights having different angles relative to the optical axis intersect with the optical axis at different positions to form a circular dispersion speckle, which is called spherical aberration, on the image plane. Additionally, lights of different wavelengths have different colors, and present different refractive indices when passing through a lens, and accordingly, one point in the object side may result in a color speckle at the image side, or may result in an image having an aureole and make the image obscure. Therefore, the spherical aberration and the chromatic aberration need to be eliminated in order to improve the imaging quality. In one embodiment, in order to eliminate the spherical aberration and the chromatic aberration, the fourth lens 2014 and the fifth lens 2015 are adhered into one piece. Because a single piece of convex lens presents negative spherical aberration and a single piece of concave lens presents positive spherical aberration, adhering the single piece of convex lens and the single piece of concave lens together can effectively eliminate the spherical aberration. Furthermore, the fourth lens 2014 has a refractive index higher than that of the fifth lens 2015, a chromatic dispersion greater than that of the fifth lens 2015, and an Abbe number lower than that of the fifth lens 2015. Therefore, adhering the fourth lens 2014 and the fifth lens 2015 together can effectively eliminate the chromatic aberration because, when the angle of the light is fixed, the greater the Abbe number of the lens is, the smaller the chromatic aberration will be; and typically, the convex lens presents negative chromatic aberration and the concave lens presents positive chromatic aberration. Thereby, adhering the biconcave fourth lens 2014 and the convex-concave fifth lens 2015 into one piece can offset each other's chromatic aberrations. Additionally, because both the refractive indices and the Abbe numbers of the fourth lens 2014 and the fifth lens 2015 differ greatly from each other, the positive and the negative spherical aberrations can also be reduced as much as possible when the chromatic aberration is eliminated, and a surplus spherical aberration will be generated to balance spherical aberrations of other lenses.

The second lens assembly 202 at least comprises one aspheric lens, which is adapted to correct spherical aberration caused by the spherical lens in collimating and focusing system. Through adjusting the camber constant and the aspheric coefficient, the aspheric lens can eliminate spherical aberration to the greatest extent so as to make the image clear, thus improving the imaging quality. For example, the second lens assembly 202 of one embodiment comprises a sixth lens 2021, a seventh lens 2022, an eighth lens 2023, a ninth lens 2024, a tenth lens 2025, an eleventh lens 2026, a twelfth lens 2027 and a thirteenth lens2028 arranged sequentially along the optical path. The sixth lens 2021 is a biconvex lens, the seventh lens 2022 is a biconcave lens, the eighth lens 2023 is a convex-concave lens, the ninth lens 2024 is a concave-convex lens, the tenth lens 2025 is a biconcave lens, the eleventh lens 2026 is an aspheric lens, the twelfth lens 2027 is a concave-convex lens, and the thirteenth lens 2028 is a concave-convex lens. Through use of the aspheric lens, elements used to improve the optical quality are simplified, and meanwhile, the stability of the system is improved and the comprehensive cost of the system is reduced.

The reflecting mirror 205 of one embodiment is a concave reflecting mirror. The concave reflecting mirror has the same principal optical axis as the first lens assembly 201, and a concave surface of the concave reflecting mirror is a free-form surface. The concave reflecting mirror can reduce image distortion and improve the image quality. Moreover, the concave reflecting mirror whose concave surface is a free-form surface has more degrees of freedom, and the smooth surface thereof can reduce light loss and image distortion so that the reflected image has a high brightness and is non-distorted, thus greatly improving the imaging quality of the optical system.

By forming the two intermediate images, the aberrations are improved; by disposing the aperture stop, light speckles are reduced and the contrast of the image is improved; and by the reflecting mirror, the optical path is extended to allow for short-throw projection with relatively low transmittance, thus projecting a large-sized image at a short distance and with a high imaging quality.

What described above are only some of the embodiments of the present disclosure, which are provided to facilitate understanding of the present disclosure but are not intended to limit the technical solutions of the present disclosure in any way or to exhaust all embodiments of the present disclosure. Accordingly, any modification or equivalent substitutions made to the technical solutions without departing from the spirits and scope of the present disclosure shall all be covered within the scope of the present disclosure.

## Claims

1. An ultra short-throw projection lens unit, being adapted to image a first image (100) displayed on a display into an amplified second image, **characterized in that** the ultra short-throw projection lens unit comprises following components that are arranged sequentially along an optical path:
a first lens assembly (101), being adapted to image the first image (100) into a first intermediate image (103);
an aperture stop (106) disposed at an imaging position of the first intermediate image (103);
a second lens assembly (102), being adapted to image the first intermediate image (103) into a second intermediate image (104); and
a reflecting mirror (105) disposed behind the second lens assembly (102), being adapted to reflect the second intermediate image (104) to form the amplified second image;
wherein the first lens assembly (101), the aperture stop (106) and the second lens assembly (102) have a same principal optical axis; and the ultra short-throw projection lens unit has a transmittance of 0.2∼0.25 and a focus of -2.9 mm∼-3.2 mm, and an offset of the first image (100) relative to the principal optical axis is greater than 120%.

2. The ultra short-throw projection lens unit according to claim 1, **characterized in that** the reflecting mirror (105) is a planar mirror or a concave reflecting mirror.

3. The ultra short-throw projection lens unit according to claim 1 or 2, **characterized in that**, when the reflecting mirror (105) is a concave reflecting mirror, the concave reflecting mirror has the same principal optical axis as the first lens assembly (101).

4. The ultra short-throw projection lens unit according to claim 2 or 3, **characterized in that** a concave surface of the concave reflecting mirror is a free-form surface.

5. The ultra short-throw projection lens unit according to claim 4, **characterized in that** the reflecting mirror (105) is disposed behind the second intermediate image (104).

6. The ultra short-throw projection lens unit according to any of the preceding claims, **characterized in that** the first lens assembly (201) comprises a first lens (2011), a second lens (2012), a third lens (2013), a fourth lens (2014) and a fifth lens (2015) arranged sequentially along the optical path, the first lens (2011) being a biconvex lens, the second lens (2012) being a biconvex lens, the third lens (2013) being a convex-concave lens, the fourth lens (2014) being a biconcave lens, and the fifth lens (2015) being a convex-concave lens.

7. The ultra short-throw projection lens unit according to claim 6, **characterized in that** the fourth lens (2014) and the fifth lens (2015) are adhered into one piece.

8. The ultra short-throw projection lens unit according to claim 6 or 7, **characterized in that** the fourth lens (2014) has a refractive index higher than that of the fifth lens (2015), a chromatic dispersion greater than that of the fifth lens (2015), and an Abbe number lower than that of the fifth lens (2015).

9. The ultra short-throw projection lens unit according to claim 8, **characterized in that** the second lens assembly (102) at least comprises one aspheric lens.

10. The ultra short-throw projection lens unit according to claim 9, **characterized in that** the second lens assembly comprises a sixth lens (2021), a seventh lens (2022), an eighth lens (2023), a ninth lens (2024), a tenth lens (2025), an eleventh lens (2026), a twelfth lens (2027) and a thirteenth lens (2028); and wherein the sixth lens (2021) is a biconvex lens, the seventh lens (2022) is a biconcave lens, the eighth lens (2023) is a convex-concave lens, the ninth lens (2024) is a concave-convex lens, the tenth lens (2025) is a biconcave lens, the eleventh lens (2026) is an aspheric lens, the twelfth lens (2027) is a concave-convex lens, and the thirteenth lens (2028) is a concave-convex lens.
